# EUROPÄISCHE PATENTSCHRIFT

(11) **EP 3 643 942 B1**
(45) Veröffentlichungstag und Bekanntmachung des Hinweises auf die Patenterteilung: **14.07.2021**
(21) Anmeldenummer: 19204896.5
(22) Anmeldetag: 23.10.2019
(51) Int. Cl.: F16D 55/28, F16D 55/36

(54) **BREMSVORRICHTUNG**
BRAKING DEVICE
DISPOSITIF DE FREINAGE

(30) Priorität: 23.10.2018 DE 102018126316
(43) Veröffentlichungstag der Anmeldung: 29.04.2020
(73) Patentinhaber: Desch Antriebstechnik GmbH & Co. KG, 59759 Arnsberg (DE)
(72) Erfinder: REINARTZ, Thomas, 45549 Sprockhövel (DE)
(74) Vertreter: Schäperklaus, Jochen

(56) Entgegenhaltungen:
- US-A1- 2008 283 346
- US-A1- 2016 281 807

## Beschreibung

Die vorliegende Erfindung betrifft eine Bremsvorrichtung gemäß dem Oberbegriff des Anspruchs 1.

Eine druckmittelgelüftete, federkraftbetätigte Mehrflächenbremse ist eine ausreichend bekannte Maschinenbaukomponente und in den verschiedensten technischen Anwendungen weit verbreitet. Diese Bremsen werden überall dort eingesetzt, wo eine drehende Welle abgebremst und/oder zuverlässig gegen verdrehen gesichert werden muss. Da das Bremsmoment durch die potenzielle Energie von vorgespannten Federn z.B. Schraubendruckfedern aufgebracht wird, ist sie eine Komponente die auch bei einem Energieausfall rotierende Teile abbremst oder festhält. Somit ist sie auch für notfall- und sicherheitsrelevante Anwendungen geeignet. Unter anderem werden sie in oder an Getrieben, Winden, Pressen, usw. eingesetzt.

Der Aufbau einer solchen Bremse besteht in der Regel aus einer Nabe, die auf die abzubremsende oder festzuhaltende Welle montiert wird. Sie ist sowohl in Umfangs- als auch in Axialrichtung fest mit der Welle verbunden und kann somit Drehmomente von der Welle übertragen. Durch den Form- und/oder Kraftschluss rotiert sie mit der Welle um. Mit der Nabe sind Reibscheiben, sogenannte Innenlamellen, in Umfangsrichtung formschlüssig verbunden. Diese Innenlamellen sind gegenüber der Nabe axial verschiebbar und sind ein Bestandteil des sogenannten Lamellenpaketes. Der zweite Bestandteil des Lamellenpakets ist zumindest eine weitere Reibscheibe, die sogenannte Außenlamelle. Es können auch mehrere Außenlamellen vorhanden sein. Zwischen den Stirnflächen der Außenund Innenlamellen befindet sich in der Regel ein Reibbelag. Dieser ist üblicherweise mit der einen oder anderen Lamelle kraftschlüssig verbunden. Wenn die Bremse geöffnet ist, befindet sich zwischen den Stirnflächen ein Lüftungspalt. Die Summe der Lüftungsspalte ergibt die Gesamtlüftung der Bremse. Die Außenlamelle(n) ist/sind in Umfangsrichtung mit dem Mantel/Zahnkranz verbunden. Der Mantel kann im Rahmen dieser Beschreibung auch als Gehäuse bezeichnet werden. In Axialrichtung ist/sind die Außenlamelle(n) gegenüber dem Mantel verschiebbar. Auf der einen Seite des Lamellenpakets ist die sogenannte Druckscheibe, die in der Regel mit dem Mantel in allen Richtungen kraftschlüssig verbunden ist. Auf der gegenüberliegenden Seite befindet sich der axial bewegliche Kolben. Dieser Kolben ist in der Regel im Mantel geführt und bildet mit diesem einen Kolbenraum. Der Kolbenraum zwischen Mantel und Kolben ist mit Dichtungen abgedichtet. Zwischen Kolben und dem abschließenden Deckel sind die Schraubendruckfedern angeordnet. Der Deckel ist wiederum mit dem Mantel in allen Richtungen kraftschlüssig verbunden. Die gesamte Komponente Bremse wird dann an einem feststehenden Bauteil z.B. Getriebegehäuse, Fundament, Tragkonstruktion, o.ä. befestigt.

Bei geöffneter Bremse wird der Kolben entgegen der Federkraft durch ein im Kolbenraum angeordnetes Druckmittel in Richtung des Deckels gedrückt. Das Druckmittel kann beispielsweise ein Fluid sein. Die Stirnflächen der Lamellen und der Reibeläge werden nicht aufeinandergepresst. Somit können die Innenlamellen und die Nabe mit der Welle rotieren. Sobald der Druck des Druckmittels kleiner wird als die Federkraft, bewegt sich der Kolben in Richtung des Lamellenpakets. Das Lamellenpaket stützt sich an der Druckscheibe ab. Durch die Federkraft werden nun die Stirnflächen der Lamellen und der Reibbeläge aufeinandergepresst. Dadurch entsteht in den aufeinandergepressten Stirnflächen ein Bremsmoment.

Dieses Bremsmoment ist abhängig von der resultierenden Anpresskraft auf die Stirnflächen, von dem wirksamen Reibdurchmesser, von den sich einstellenden Reibkoeffizienten und der Anzahl der aktiven Reibflächen.

Bei der Verwendung der Bremsen wird vorausgesetzt, dass die Funktion der Bremse immer gewährleistet ist und somit das definierte Bremsmoment bei druckloser Bremse vorliegt.

US 2008/0283346 A1 beschreibt eine Bremsvorrichtung mit einem Kraftsensor, der einen Kraftfluss von einem Motor zu einer Druckschreibe misst.

Demgegenüber liegt der vorliegenden Erfindung die Aufgabe zugrunde, eine Bremsvorrichtung zu schaffen, bei der ihre korrekte Funktionsweise überprüft werden kann. Außerdem soll die Verwendung einer solchen Bremsvorrichtung zur Abbremsung einer Welle einer Presse und ein System mit einer solchen Bremsvorrichtung und einer Presse geschaffen werden.

Diese Aufgabe wird durch eine Bremsvorrichtung gemäß Anspruch 1, eine Verwendung gemäß Anspruch 13 und ein System gemäß Anspruch 14 gelöst. Ausführungsformen der Erfindung sind in den abhängigen Ansprüchen angegeben.

Die Bremsvorrichtung umfasst eine Nabe, die an einer zu bremsenden Welle befestigt werden kann. Zumindest eine Innenlamelle ist mit der Nabe verbunden. Außerdem umfasst die Bremsvorrichtung ein Gehäuse, zumindest eine mit dem Gehäuse verbundene Außenlamelle, einen Kolben und eine am Gehäuse befestigte Druckscheibe. Die Außenlamelle ist neben der Innenlamelle angeordnet. Zwischen der Innenlamelle und der Außenlamelle ist ein Spalt angeordnet. Der Kolben ist dazu ausgebildet, die Innenlamelle und die Außenlamelle zusammenzudrücken. Die Bremsvorrichtung umfasst außerdem ein Detektionsmittel, das dazu ausgebildet ist, einen Betriebszustand der Bremsvorrichtung zu detektieren. Der Betriebszustand kann insbesondere ein eingeschalteter oder ein ausgeschalteter Betriebszustand sein. Im Sinne dieser Anmeldung soll ein Betriebszustand explizit nicht einen Verschleißzustand von Verschleißkomponenten umfassen.

Es ist auch möglich, dass die Bremsvorrichtung mehrere Innenlamellen und/oder mehrere Außenlamellen umfasst. In diesem Fall können die Innenlamellen zwischen den Außenlamellen und/oder umgekehrt angeordnet sein.

Die Detektion des Betriebszustands ist vorteilhaft, um die korrekte Funktionsweise der Bremsvorrichtung zu überprüfen. Es wird eine zuverlässige Aussage darüber ermöglicht, ob die Bremse eingeschaltet ist und ob das benötigte Bremsmoment tatsächlich zur Verfügung steht. Dies erhöht die Sicherheit der Bremsvorrichtung.

Das Detektionsmittel umfasst einen ersten Kraftsensor, der dazu ausgebildet ist, einen ersten Kraftfluss von der Druckscheibe zum Gehäuse zu messen. Das Detektionsmittel ist dazu ausgebildet, den gemessenen ersten Kraftfluss zur Detektion des Betriebszustands zu verwenden. Die Verwendung des ersten Kraftflusses zur Detektion des Betriebszustands ist vorteilhaft, um einen unerwünschten oder unzulässigen Betriebszustand zu detektieren. Beispielsweise kann das Detektionsmittel dazu ausgebildet sein, den unerwünschten oder unzulässigen Betriebszustand zu detektieren, wenn der gemessene erste Kraftfluss nicht einem erwarteten Kraftfluss entspricht. Dies würde einem Fall entsprechen, bei dem nicht die komplette Bremskraft wirkt. Beispielsweise könnte eine Lamelle der Bremsvorrichtung verkantet sein oder eine Feder, die die Bremskraft ausübt, kann gebrochen sein oder einer unzulässig hohen Temperatur ausgesetzt.

Nach einer Ausführungsform der Erfindung kann die Bremsvorrichtung in einen eingeschalteten und in einen ausgeschalteten Betriebszustand schaltbar sein. Diese beiden Betriebszustände können durch das Detektionsmittel detektierbar sein. Im eingeschalteten Betriebszustand kann der Kolben die Innenlamellen und die Außenlamelle zusammendrücken. Im ausgeschalteten Betriebszustand kann der Spalt zwischen den Innenlamellen und der Außenlamelle angeordnet sein. Das Detektionsmittel kann dazu ausgebildet sein, zu detektieren, ob die Bremsvorrichtung im eingeschalteten oder im ausgeschalteten Zustand ist.

Nach einer Ausführungsform der Erfindung kann das Detektionsmittel einen Wegsensor umfassen, der dazu ausgebildet ist, eine Distanz zu messen, um die der Kolben bewegt worden ist. Die gemessene Distanz wird dabei zur Detektion des Betriebszustands verwendet. Die Verwendung des Wegs ist vorteilhaft, um zu detektieren, ob der Kolben über die gesamte mögliche Distanz bewegt wurde oder ob er nur eine kürzere Distanz zurückgelegt hat, sodass nicht die volle Bremskraft vorhanden ist.

Beispielsweise kann das Detektionsmittel einen unerwünschten oder unzulässigen Betriebszustand detektieren, wenn der Kolben nicht über die komplette Distanz, sondern nur über einen Teil dieser Distanz bewegt wurde. Es kann dann beispielsweise eine Fehlermeldung ausgegeben werden, sodass die korrekte Funktion der Bremsvorrichtung durch einen Fachmann wiederhergestellt werden kann.

Nach einer Ausführungsform der Erfindung kann der Wegsensor magneto-induktiv ausgebildet sein. Hierunter wird im Rahmen dieser Beschreibung insbesondere verstanden, dass die Erfassung einer Bewegung des Kolbens induktiv erfasst wird.

Nach einer Ausführungsform der Erfindung kann der Wegsensor axial ausgerichtet sein. Hierunter wird im Rahmen dieser Beschreibung insbesondere verstanden, dass die Längsachse des Wegsensors parallel zur Hauptlängsachse ausgerichtet ist, wobei die Hauptlängsachse beispielsweise die Achse ist, um die die abzubremsende Welle rotiert..

Nach einer Ausführungsform der Erfindung kann der Wegsensor radial ausgerichtet sein. Hierunter wird im Rahmen dieser Beschreibung verstanden, dass sich die Längsachse des Wegsensors radial von der Hauptlängsachse weg erstreckt.

### gewesen sein.

Nach einer Ausführungsform der Erfindung kann der erste Kraftsensor eine Sensorschraube mit Piezo-Kristallen umfassen. Ein solcher Kraftsensor kann besonders kompakt gebaut werden und dabei trotzdem präzise Ergebnisse liefern.

Nach einer Ausführungsform der Erfindung kann die Bremsvorrichtung eine Feder umfassen, die dazu ausgebildet ist, eine Federkraft auf den Kolben auszuüben. So kann sichergestellt werden, dass die Bremsvorrichtung beispielsweise bei einem Druckabfall automatisch eine Notbremsung durchführt.

Nach einer Ausführungsform der Erfindung kann die Bremsvorrichtung einen Kolbenraum umfassen, in dem der Kolben geführt ist.

Nach einer Ausführungsform der Erfindung kann der Kolbenraum durch das Gehäuse und einen Deckel begrenzt sein. Die Feder kann dabei am Deckel abgestützt sein. Die Bremsvorrichtung kann einen zweiten Kraftsensor umfassen, der dazu ausgebildet ist, den selben Kraftfluss wie der erste Kraftsensor oder einen zweiten Kraftfluss vom Gehäuse zum Deckel zu messen. Das Detektionsmittel kann dazu ausgebildet sein, den vom zweiten Kraftsensor gemessenen Kraftfluss zur Detektion des Betriebszustands zu verwenden. Auch die Verwendung des zweiten Kraftflusses zur Detektion des Betriebszustands kann vorteilhaft sein, um einen unerwünschten oder unzulässigen Betriebszustand zu detektieren. Die Verwendung des zweiten Kraftflusses führt zu einer Redundanz, sodass mögliche Messfehler erkannt werden können. Beispielsweise kann zu diesem Zweck der erste Kraftfluss mit dem zweiten Kraftfluss verglichen werden.

Es ist möglich, dass der zweite Kraftsensor eine Sensorschraube mit Piezo-Kristallen umfasst. Dies ist eine besonders platzsparende Art, den zweiten Kraftsensor auszubilden.

Nach einer Ausführungsform der Erfindung können die Innenlamellen formschlüssig mit der Nabe verbunden sein.

Nach einer Ausführungsform der Erfindung können die Innenlamellen und/oder die Außenlamelle einen Reibbelag auf den jeweiligen Stirnflächen aufweisen. Die Stirnflächen zweier benachbarter Lamellen können dabei einander zugewandt sein.

Das System gemäß Anspruch 14 umfasst eine Bremsvorrichtung nach einer Ausführungsform der Erfindung und eine Welle einer Presse, wobei die Nabe an der Welle befestigt ist.

Beim Schalten der Bremsvorrichtung in den eingeschalteten Zustand sind verschiedene Ursachen denkbar, die ein Bereitstellen des erwünschten Bremsmoments oder eines Teils davon verhindern können.

Diese Ursachen können mit den nachfolgend geschilderten Wirkungen auftreten:
1) Das Druckmittel kann nicht oder teilweise nicht aus dem Kolbenraum entweichen. Dadurch kann der Kolben keinen oder nur einen Teil des Weges zurücklegen. Somit kann auch die Kraft der Federn nicht oder nur teilweise nicht wirken und das Bremsmoment wird nicht oder teilweise nicht aufgebaut.
2) Der Kolben verkantet in der axialen Führung. Somit kann er trotz drucklosem Kolbenraum nicht oder teilweise nicht axial verfahren und den Weg nicht überbrücken.
3) Eine oder mehrere Feder(n), z.B. Schraubendruckfedern, brechen oder haben auf Grund unzulässiger Betriebszustände, durch z.B. unzulässig hohe Temperaturen einen Kraftverlust. Dann kann zwar der Kolben den gesamten Weg zurücklegen, aber die erwünschte Axialkraft ist nicht vorhanden und somit wird auch das erwünschte Bremsmoment nicht aufgebaut.
4) Die Lamellen können formschlüssig mit korrespondierenden Bauteilen in Umfangsrichtung verbunden sein. In Axialrichtung können die jeweiligen Lamellen gegenüber den korrespondierenden Bauteilen beweglich sein. Durch z.B. ein verkanten einer der Lamellen in dem jeweils korrespondierenden Bauteil oder durch Störstellen kann verhindert werden, dass alle Reibflächen aktiv an der Bremsmomenterzeugung beteiligt sind. Somit wird das erwünschte Bremsmoment nicht erzeugt.

Anhand der oben geschilderten Ursachen und Wirkungen von möglichen Zuständen, die ein Ausfall der Funktion der Bremse beschreiben, sind folgende Zusammenhänge noch zu erklären:
1) Um das erwünschte Bremsmoment zu erzeugen, muss der Kolben den gesamten Weg vom Betriebszustand "Bremse aus" zum Betriebszustand "Bremse ein" zurücklegen können.
2) Wenn der Kolben nur einen Anteil des gesamten Weges zurücklegt, kann die Bremse kein oder nur einen Teil des erwünschten Bremsmoments erzeugen.
3) Wenn der Kolben den gesamten Weg zurücklegen kann und die Reibflächen aufeinanderpresst, entsteht innerhalb der Bremsvorrichtung ein geschlossener Kraftfluss.
4) Wenn alle Federn schadensfrei wirken, entspricht der vorhandene Kraftfluss dem erwünschten Kraftfluss.

Um sicherzustellen, dass
a) der Kolben den gesamten Weg zurückgelegt hat und
b) der definierte Kraftfluss wirkt, können folgende Sensoren verwendet werden.

Für den oben mit a) beschriebenen Zustand kann das Detektionsmittel Wegsensoren z.B. berührungslose, magneto-induktive Wegsensoren, umfassen.

Es ist möglich, dass der Sensor in axialer Richtung angeordnet ist. Es ist auch möglich, dass der Sensor radial angeordnet ist. In diesem Fall kann der Sensor dazu ausgebildet sein, den Kolbenhub zu detektieren.

Für den oben mit b) beschriebenen Zustand kann das Detektionsmittel Kraftsensoren, z.B. Sensorschrauben mit Piezo-Kristallen, umfassen.

Um zu detektieren, ob der Kraftfluss in allen Reibflächen wirkt, kann der erste Kraftsensor in der Verbindung zwischen der Druckscheibe und dem Gehäuse angeordnet sein. Es ist aber auch denkbar, dass zwei Kraftsensoren verwendet werden. Dann kann in der Verbindung zwischen dem Deckel und dem Gehäuse der zweite Kraftsensor angeordnet sein.

Somit ist ein direkter Vergleich der zwei Messstellen möglich. Ein Kraftsensor der oben beschriebenen Gattung kann die beiden Zuständen der Bremse "ein" und "aus" detektieren, da bei den beiden Schaltzuständen die Kraft im Kraftfluss unterschiedlich ist.

Auch der oben beschriebene Wegsensor kann beide Zustände der Bremse detektieren.

Somit ist bei Verwendung beider Sensorarten sogar eine redundante Erfassung der Schaltzustände gegeben.

Die sichere Erfassung der Schalt- und Kraftzustände ermöglicht nun für den Maschinenhersteller eine zuverlässige Aussage darüber, ob die Bremsvorrichtung eingeschaltet ist und ob das benötigte Bremsmoment tatsächlich zur Verfügung steht. Somit kann ein höherer Level bei sicherheitsrelevanten Anwendungen wie z.B. Pressenanwendungen erreicht werden. Wenn nicht das gesamte Bremsmoment zur Verfügung steht, kann beispielsweise eine Fehlermeldung ausgegeben werden.

Eine oben geschilderte Erkennung von Schaltzuständen wird teilweise von entsprechenden Zulassungsgesellschaften gefordert. Aber auch der Schutz von Personen die an entsprechenden Maschinen arbeiten, kann durch die oben genannte Erfindung erhöht werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: eine schematische Schnittansicht einer Ausführungsform der Erfindung mit einem ersten Kraftsensor;
- Fig. 2: eine schematische Schnittansicht einer Ausführungsform der Erfindung mit einem zweiten Kraftsensor; und
- Fig. 3: eine schematische Schnittansicht einer Ausführungsform der Erfindung mit einem Wegsensor.

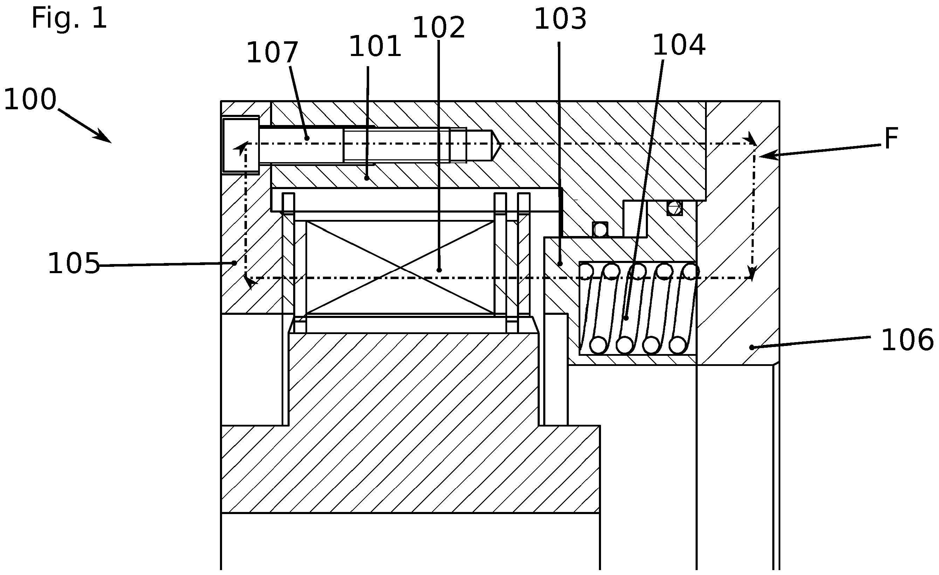

Die Bremsvorrichtung 100 in Figur 1 umfasst ein Gehäuse 101, ein Lamellenpacket 102 mit Innenlamellen und Außenlamellen, einen Kolben 103, eine Feder 104 und eine Druckscheibe 105. Die Innenlamellen sind mit einer zu bremsenden Welle verbunden. Die Feder 104 übt eine Kraft auf den Kolben 103 aus. Der Kolben 103 ist in einem Kolbenraum geführt, der durch einen Deckel 106 und das Gehäuse 101 begrenzt ist. Im Kolbenraum ist als Druckmittel ein Fluid angeordnet, dessen fluidischer Druck variiert werden kann.

Wenn der Druck des Fluids ausreichend groß ist, übt der Kolben 103 keine Kraft auf das Lamellenpacket 102 aus. Zwischen den Innen- und Außenlamellen ist dann jeweils ein Spalt vorhanden, sodass keine Bremskraft auf die Welle ausgeübt wird. Die Bremse ist ausgeschaltet.

Wenn der Druck des Fluids verringert wird und geringer wird als die von der Feder 104 ausgeübte Kraft, übt der Kolben 103 eine Kraft auf das Lamellenpacket 102 aus. Die Innen- und Außenlamellen werden zusammengedrückt. Da die Außenlamellen am Gehäuse 101 befestigt sind, wird die Welle abgebremst. Die Bremse ist eingeschaltet.

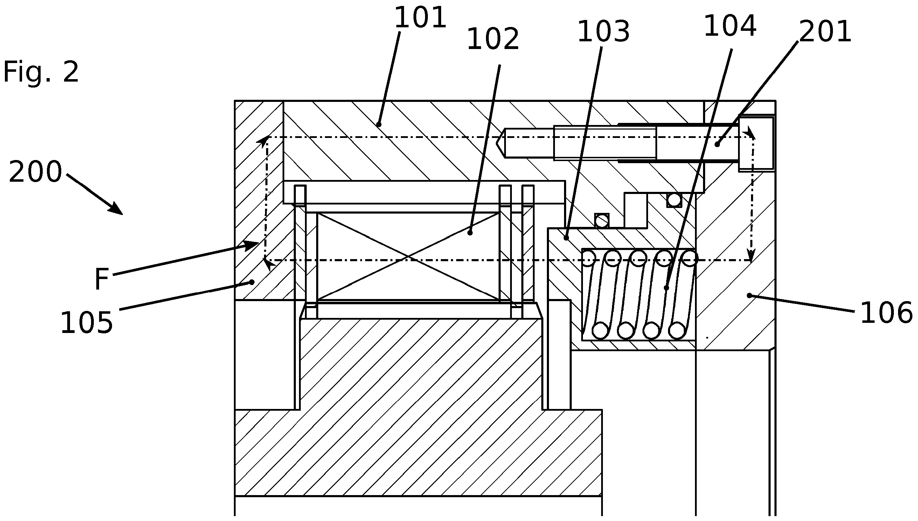

Im eingeschalteten Zustand gibt es einen Kraftfluss F vom Lamellenpacket 102 über die Druckscheibe 105, zum Gehäuse 101. Vom Gehäuse 101 fließt die Kraft weiter zum Deckel 106, an dem wiederum die Feder 104 abgestützt ist. Der Kraftfluss F ist in den Figuren 1 und 2 durch Pfeile verdeutlicht.

Ein erster Kraftsensor 107 ist so angeordnet, dass er den Kraftfluss F von der Druckscheibe 105 zum Gehäuse 101 messen kann. Dieser gemessene erste Kraftfluss F kann als Indikator dafür genutzt werden, um zu detektieren, in welchem Betriebszustand die Bremse ist. Außerdem kann detektiert werden, wie groß die Abweichung zwischen der theoretisch bekannten Federkraft und der genutzten Bremskraft ist. Wenn diese Abweichung zu groß ist, könnte ein Fehler vorliegen. Beispielsweise könnte(n) die Feder(n) 104 beschädigt sein oder eine oder mehrere Lamellen könnten verkantet sein.

Die Funktionsweise der Bremsvorrichtung 200 aus Figur 2 ist sehr ähnlich der Funktionsweise der Bremsvorrichtung 100 aus Figur 1. In Figur 2 ist ein zweiter Kraftsensor 201 dargestellt, der so angeordnet ist, dass er den Kraftfluss F vom Gehäuse 101 zum Deckel 106 misst. Auch dieser gemessene zweite Kraftfluss F kann als Indikator dafür verwendet werden, in welchem Betriebszustand die Bremsvorrichtung ist und ob sie eine Funktionsstörung aufweist.

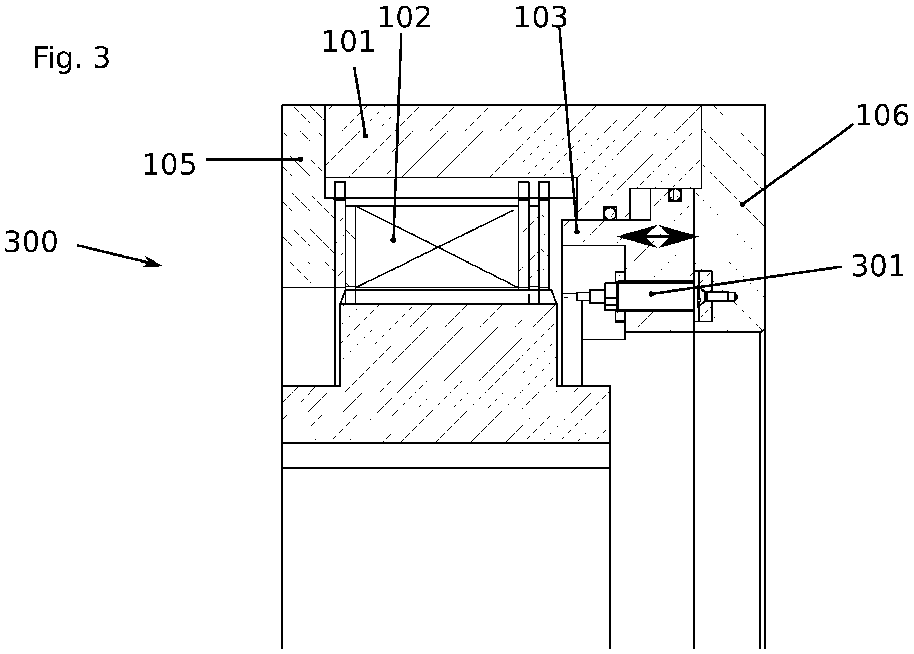

Die Funktionsweise der Bremsvorrichtung 300 aus Figur 3 ist ebenfalls ähnlich der Funktionsweise der Bremsvorrichtungen 100 und 200 aus den Figuren 1 und 2. Im Unterschied dazu ist jedoch ein Wegsensor 301 vorgesehen, der so angeordnet ist, dass er eine vom Kolben 103 zurückgelegte Distanz messen kann. Auch diese gemessene Distanz kann dafür genutzt werden, um den Betriebszustand der Bremsvorrichtung 300 zu detektieren. Die Bewegungsrichtung des Kolbens 103 ist in Figur 3 mit einem Doppelpfeil verdeutlicht.

Die gemessene Distanz kann dann mit einer theoretisch bekannten maximalen oder mit der bei der Erstmontage ermittelten Distanz verglichen werden. Bei einer zu großen Abweichung kann dies ein Hinweis auf eine Funktionsstörung sein. Es könnte beispielsweise nicht das gesamte Druckmittel aus dem Kolbenraum ausgeströmt sein, sodass der Kolben 103 nicht über die gesamte zur Verfügung stehende Distanz bewegt wurde und somit nur noch eine reduzierte Bremskraft zur Verfügung steht. Ein anderer Grund könnte sein, dass der Kolben 103 verkantet ist und deshalb nicht weiterbewegt werden kann. Auch dies verursacht eine verringerte Bremskraft.

## Patentansprüche

1. Bremsvorrichtung (100), umfassend
- eine Nabe, die an einer zu bremsende Welle befestigbar ist,
- zumindest eine mit der Nabe verbundene Innenlamelle,
- ein Gehäuse (101),
- zumindest eine mit dem Gehäuse verbundene Außenlamelle,
- einen Kolben (103) und
- eine am Gehäuse befestigte Druckscheibe (105),
wobei die Außenlamelle neben der Innenlamelle angeordnet ist, und wobei zwischen der Innenlamelle und der Außenlamelle ein Spalt angeordnet ist, wobei der Kolben dazu ausgebildet ist, die Innenlamelle und die Außenlamelle zusammen zu drücken, wobei die Bremsvorrichtung ein Detektionsmittel umfasst, das dazu ausgebildet ist, einen Betriebszustand der Bremsvorrichtung zu detektieren, **dadurch gekennzeichnet, dass** das Detektionsmittel einen ersten Kraftsensor (107) umfasst, der dazu ausgebildet ist, einen ersten Kraftfluss von der Druckscheibe zum Gehäuse zu messen, wobei das Detektionsmittel dazu ausgebildet ist, den gemessenen ersten Kraftfluss zur Detektion des Betriebszustands zu verwenden.

2. Bremsvorrichtung nach Anspruch 1, **dadurch gekennzeichnet, dass** die Bremsvorrichtung in einen eingeschalteten und in einen ausgeschalteten Betriebszustand schaltbar ist, wobei im eingeschalteten Betriebszustand der Kolben die Innenlamelle und die Außenlamelle zusammendrückt, und wobei im ausgeschalteten Betriebszustand der Spalt zwischen der Innenlamelle und der Außenlamelle angeordnet ist, wobei das Detektionsmittel dazu ausgebildet ist, den eingeschalteten und den ausgeschalteten Betriebszustand zu detektieren.

3. Bremsvorrichtung nach einem der vorherigen Ansprüche,
**dadurch gekennzeichnet, dass** das Detektionsmittel einen Wegsensor (301) umfasst, der dazu ausgebildet ist, eine Distanz zu messen, um die der Kolben bewegt worden ist, wobei die gemessene Distanz zur Detektion des Betriebszustands verwendet wird.

4. Bremsvorrichtung nach dem vorherigen Anspruch, **dadurch gekennzeichnet, dass** der Wegsensor magneto-induktiv ausgebildet ist.

5. Bremsvorrichtung nach einem der beiden vorherigen Ansprüche, **dadurch gekennzeichnet, dass** der Wegsensor axial ausgerichtet ist.

6. Bremsvorrichtung nach einem der Ansprüche 3 oder 4, **dadurch gekennzeichnet, dass** der Wegsensor radial ausgerichtet ist.

7. Bremsvorrichtung nach einem der vorherigen Ansprüche,
**dadurch gekennzeichnet, dass** der erste Kraftsensor eine Sensorschraube mit Piezo-Kristallen umfasst.

8. Bremsvorrichtung nach einem der vorherigen Ansprüche,
**dadurch gekennzeichnet, dass** die Bremsvorrichtung eine Feder (104) umfasst, die dazu ausgebildet ist, eine Federkraft auf den Kolben auszuüben.

9. Bremsvorrichtung nach einem der vorherigen Ansprüche,
**dadurch gekennzeichnet, dass** die Bremsvorrichtung einen Kolbenraum umfasst, in dem der Kolben geführt ist.

10. Bremsvorrichtung nach dem vorherigen Anspruch, **dadurch gekennzeichnet, dass** der Kolbenraum durch das Gehäuse und einen Deckel (106) begrenzt ist, wobei die Feder am Decke abgestützt ist, wobei die Bremsvorrichtung einen zweiten Kraftsensor (201) umfasst, der dazu ausgebildet ist, einen zweiten Kraftfluss vom Gehäuse zum Deckel zu messen, wobei das Detektionsmittel dazu ausgebildet ist, den gemessenen zweiten Kraftfluss zur Detektion des Betriebszustands zu verwenden.

11. Bremsvorrichtung nach einem der vorherigen Ansprüche,
**dadurch gekennzeichnet, dass** die Innenlamelle formschlüssig mit der Nabe verbunden sind.

12. Bremsvorrichtung nach einem der vorherigen Ansprüche,
**dadurch gekennzeichnet, dass** die Innenlamelle und/oder die Außenlamelle einen Reibbelag auf den jeweiligen Stirnflächen aufweisen, wobei die Stirnflächen zweier benachbarter Lamellen einander zugewandt sind.

13. Verwendung einer Bremsvorrichtung nach einem der vorherigen Ansprüche zur Abbremsung einer Welle einer Presse.

14. System, umfassend eine Bremsvorrichtung nach einem der Ansprüche 1 bis 12 und eine Presse mit einer Welle, wobei die Nabe an der Welle befestigt ist.

## Claims

1. Braking device (100) comprising
- a hub that can be attached to a shaft to be braked,
- at least one inner disc connected to the hub,
- a housing (101),
- at least one outer disc connected to the housing,
- a piston (103) and
- a pressure plate (105) attached to the housing,
wherein the outer disc is arranged adjacent to the inner disc, and wherein a gap is arranged between the inner disc and the outer disc, wherein the piston is adapted to press the inner disc and the outer disc together, wherein the braking device comprises a detection means adapted to detect an operating condition of the braking device, **characterised in that** the detection means comprises a first force sensor (107) adapted to measure a first flow of force from the pressure plate to the housing, the detection means being adapted to use the measured first flow of force for detection of the operating condition.

2. Braking device according to claim 1, **characterised in that** the braking device is switchable into a switched-on and a switched-off operating condition, wherein in the switched-on operating condition the piston presses the inner disc and the outer disc together, and wherein in the switched-off operating condition the gap is arranged between the inner disc and the outer disc, wherein the detection means is adapted to detect the switched-on and the switched-off operating condition.

3. Braking device according to any one of the preceding claims, **characterised in that** the detection means comprises a displacement sensor (301) adapted to measure a distance by which the piston has been moved, the measured distance being used to detect the operating condition.

4. Braking device according to the preceding claim, **characterised in that** the displacement sensor is magneto-inductive.

5. Braking device according to any one of the two preceding claims, **characterised in that** the displacement sensor is axially aligned.

6. Braking device according to any one of claims 3 or 4, **characterised in that** the displacement sensor is radially aligned.

7. Braking device according to any one of the preceding claims, **characterised in that** the first force sensor comprises a sensor bolt with piezo crystals.

8. Braking device according to any one of the preceding claims, **characterised in that** the brake device comprises a spring (104) adapted to exert a spring force on the piston.

9. Braking device according to any one of the preceding claims, **characterised in that** the braking device comprises a piston chamber in which the piston is guided.

10. Braking device according to the preceding claim, **characterised in that** the piston chamber is delimited by the housing and a cover (106), the spring being supported on the cover, the braking device comprising a second force sensor (201) adapted to measure a second flow of force from the housing to the cover, the detection means being adapted to use the measured second flow of force for detection of the operating condition.

11. Braking device according to any one of the preceding claims, **characterised in that** the inner disc has a positive fit to the hub.

12. Braking device according to any one of the preceding claims, **characterised in that** the inner disc and/or the outer disc have a friction lining on the respective front faces, the front faces of two adjacent discs facing each other.

13. Use of a braking device according to any one of the preceding claims for braking a shaft of a press.

14. System comprising a braking device according to any one of claims 1 to 12 and a press having a shaft, wherein the hub is attached to the shaft.

## Revendications

1. Dispositif de freinage (100), comprenant
- un moyeu qui peut être fixé à un arbre à freiner,
- au moins une lamelle intérieure reliée au moyeu,
- un boîtier (101),
- au moins une lamelle extérieure reliée au boîtier,
- un piston (103) et
- un disque de pression (105) fixé au boîtier,
dans lequel la lamelle extérieure est agencée à côté de la lamelle intérieure, et dans lequel une fente est agencée entre la lamelle intérieure et la lamelle extérieure, dans lequel le piston est réalisé afin de presser la lamelle intérieure et la lamelle extérieure ensemble, dans lequel le dispositif de freinage comporte un moyen de détection qui est réalisé afin de détecter un état de fonctionnement du dispositif de freinage, **caractérisé en ce que** le moyen de détection comporte un premier capteur de force (107) qui est réalisé afin de mesurer un premier flux de force du disque de pression au boîtier, dans lequel le moyen de détection est réalisé afin d'utiliser le premier flux de force mesuré pour la détection de l'état de fonctionnement.

2. Dispositif de freinage selon la revendication 1, **caractérisé en ce que** le dispositif de freinage peut être commuté dans un état de fonctionnement activé et dans un état de fonctionnement désactivé, dans lequel dans l'état de fonctionnement activé le piston presse ensemble la lamelle intérieure et la lamelle extérieure, et dans lequel dans l'état de fonctionnement désactivé la fente est agencée entre la lamelle intérieure et la lamelle extérieure, dans lequel le moyen de détection est réalisé afin de détecter l'état de fonctionnement activé et l'état de fonctionnement désactivé.

3. Dispositif de freinage selon l'une des revendications précédentes, **caractérisé en ce que** le moyen de détection comporte un capteur de course (301) qui est réalisé afin de mesurer une distance, de laquelle le piston a été déplacé, dans lequel la distance mesurée est utilisée pour la détection de l'état de fonctionnement.

4. Dispositif de freinage selon la revendication précédente, **caractérisé en ce que** le capteur de course est réalisé de manière magnéto-inductive.

5. Dispositif de freinage selon l'une des deux revendications précédentes, **caractérisé en ce que** le capteur de course est orienté de manière axiale.

6. Dispositif de freinage selon l'une des revendications 3 ou 4, **caractérisé en ce que** le capteur de course est orientée de manière radiale.

7. Dispositif de freinage selon l'une des revendications précédentes, **caractérisé en ce que** le premier capteur de force comporte une vis de capteur avec des piézo-cristaux.

8. Dispositif de freinage selon l'une des revendications précédentes, **caractérisé en ce que** le dispositif de freinage comporte un ressort (104) qui est réalisé afin d'exercer une force de ressort sur le piston.

9. Dispositif de freinage selon l'une des revendications précédentes, **caractérisé en ce que** le dispositif de freinage comporte un espace de piston, dans lequel le piston est guidé.

10. Dispositif de freinage selon la revendication précédente, **caractérisé en ce que** l'espace de piston est délimité par le boîtier et un couvercle (106), dans lequel le ressort est en appui contre le couvercle, dans lequel le dispositif de freinage comporte un second capteur de force (201) qui est réalisé afin de mesurer un second flux de force du boîtier au couvercle, dans lequel le moyen de détection est réalisé afin d'utiliser le second flux de force mesuré pour la détection de l'état de fonctionnement.

11. Dispositif de freinage selon l'une des revendications précédentes, **caractérisé en ce que** la lamelle intérieure est reliée par complémentarité de formes au moyeu.

12. Dispositif de freinage selon l'une des revendications précédentes, **caractérisé en ce que** la lamelle intérieure et/ou la lamelle extérieure présente(nt) une garniture de friction sur les surfaces avant respectives, dans lequel les surfaces avant de deux lamelles contiguës sont tournées l'une vers l'autre.

13. Utilisation d'un dispositif de freinage selon l'une des revendications précédentes pour le freinage d'un arbre d'une presse.

14. Système, comprenant un dispositif de freinage selon l'une des revendications 1 à 12 et une presse avec un arbre, dans lequel le moyeu est fixé à l'arbre.
